# EUROPÄISCHE PATENTSCHRIFT

(11) **EP 2 890 752 B1**
(45) Veröffentlichungstag und Bekanntmachung des Hinweises auf die Patenterteilung: **27.02.2019**
(21) Anmeldenummer: 13748001.8
(22) Anmeldetag: 01.08.2013
(51) Int. Cl.: C09J 7/38, C09J 7/40, C09J 7/22, B41F 27/12

(54) **GERILLTES KLEBEBAND**
GROOVED ADHESIVE TAPE
RUBAN ADHÉSIF RAINURÉ

(30) Priorität: 29.08.2012 DE 102012215345
(43) Veröffentlichungstag der Anmeldung: 08.07.2015
(73) Patentinhaber: tesa SE, 22848 Norderstedt (DE)
(72) Erfinder: EBENAU, Steffen, 22089 Hamburg (DE); THEBUD, Nils, Dr., 21335 Lüneburg (DE)
(86) Internationale Anmeldenummer: PCT/EP2013/066203
(87) Internationale Veröffentlichungsnummer: WO 2014/032905

(56) Entgegenhaltungen:
- EP-A1- 1 739 147
- EP-A1- 2 258 781
- DE-A1-102005 061 768
- GB-A- 2 412 335
- JP-A- H05 289 319

## Beschreibung

Die Erfindung liegt auf dem technischen Gebiet der Klebebänder. Insbesondere betrifft die Erfindung Klebebänder mit einer bestimmten Topographie in der Oberfläche einer Klebeschicht.

Klebebänder werden in vielfältiger Weise zum Verbinden von Substraten, aber beispielsweise auch als Abdeck- oder Isolierbänder eingesetzt. Eine wichtige Rolle bei Verklebungen mit Klebebändern spielt die Beschaffenheit der Kontaktfläche zwischen Klebstoff und Substrat. Diese kann durch verschiedene äußere Einflüsse beeinträchtigt werden, wobei diese Einflüsse in der Regel zu einer Verringerung der zur Verfügung stehenden Kontaktfläche führen, wodurch wiederum die Qualität der angestrebten Verklebung sinkt. Beispielsweise kann die Kontaktfläche durch Lufteinschlüsse zwischen Klebstoff und Substrat verringert werden. Dies äußert sich häufig in ungenauen und/oder wenig festen und dauerhaften Verklebungen.

Ein exaktes Positionieren von zu verklebenden Substraten ist zum Beispiel in Flexodruckverfahren unerlässlich. Dabei handelt es sich um Rotationsdruckverfahren, bei denen flexible Druckplatten aus Fotopolymer oder Gummi benutzt werden, die ein Relief entsprechend der aufzudruckenden Information aufweisen. Diese Druckplatten oder Druckformen werden auf einem Druckzylinder befestigt. Dazu werden Klebebänder verwendet, die durch ihre Kompressibilitätseigenschaften die Druckqualität wesentlich beeinflussen.

Im Druckverfahren durchläuft die Druckplatte dann ein Farbreservoir, wobei das Relief die Druckfarbe aufnimmt. Anschließend transportiert der Druckzylinder die Druckplatte zu einer Transferstation, wo die Druckfarbe enthaltende Oberfläche mit dem zu bedruckenden Substrat in Kontakt kommt. Beim Ablösen der Druckplatte vom Substrat spaltet der Druckfarbenfilm und hinterlässt einen Abdruck entsprechend dem auf der Druckplattenoberfläche enthaltenen Relief. Der Farbtransfer setzt eine präzise Kontrolle des Anpressdrucks beim Aufsetzen der Druckplatte auf das Substrat voraus, der wesentlich die Auftragsdicke und Einheitlichkeit des Druckbildes bestimmt.

Typischerweise wird zum Befestigen der Druckplatte am Druckzylinder ein doppelseitiges Klebeband eingesetzt. Um eine hohe Druckqualität zu gewährleisten, muss die Druckplatte sehr sorgfältig am Druckzylinder angebracht und genau positioniert werden. Dabei kommt es häufig vor, dass die Position der Platte mehrfach nachjustiert werden muss. Während des Anbringens der Platte am Druckzylinder und während eines eventuellen Repositionierens kommt es häufig zum Einschluss von Luft an den Grenzflächen zwischen Druckplatte und Klebeband und/oder zwischen Klebeband und Träger beziehungsweise Druckzylinder. Derartige Luftblasen führen zu Veränderungen des Anpressdrucks beim Aufsetzen der Druckplatte auf das Substrat und stellen eine der wichtigsten Fehlerquellen in flexografischen Druckverfahren dar.

Zwar ist es grundsätzlich möglich, die Lufteinschlüsse mit Spritzen oder Messern zu entfernen, jedoch können diese Werkzeuge auch Schäden an den Druckplatten verursachen. Daher wurde versucht, dem Einschluss von Luftblasen mit einer speziellen Ausgestaltung der Klebebänder zu begegnen. So wurden Klebebänder mit parallel streifenweisem oder korrugiertem Klebstoffmuster eingesetzt. Derartige Klebebänder haben sich allerdings als zu wenig zuverlässig hinsichtlich der erreichten Verklebungsqualität erwiesen. Obwohl sich damit Luft effizient aus den Grenzflächen heraus treiben ließ, war die Klebwirkung zwischen Träger und Druckplatte insbesondere bei hohen Durchsatzraten zu unzuverlässig. Auch Klebebändern mit unregelmäßigem Klebstoffrelief wurden ausprobiert, zeigten aber ebenfalls unzulängliche Klebefestigkeiten und wiesen überdies in Teilbereichen nach wie vor Lufteinschlüsse auf.

US 5,296,277 beschreibt ein Klebeband mit einer Anzahl von Erhebungen in der Klebeschicht, welche abgeflachte, klebende Spitzen aufweisen, deren Fläche weniger als 25 % der Gesamtfläche der Klebeschicht ausmachen.

US 5,362,516 beschreibt eine Strukturierung der Oberfläche einer Klebeschicht mit Hilfe zuvor aufgebrachter Kugeln, über die dann der Klebstoff verteilt wird. Einen ähnlichen Aufbau hat US 5,141,790 zum Gegenstand, wobei die Strukturierung über in die Klebeschicht eingebrachte Partikel erreicht wird, deren Spitzen im Wesentlichen frei von Klebstoff sind.

GB 1 511 060 beschreibt eine Klebeschicht mit mindestens einem längeren Grat oder einer längeren Aussparung, wobei mindestens eine dieser Strukturen den äußeren Rand der Klebeschicht durchbricht.

US 5,268,228 beschreibt ein doppelseitiges Klebeband mit ein- oder beidseitig in der Klebeschicht enthaltenen Fugen, die zum Ableiten der Luft beim Verkleben dienen sollen und so dimensioniert sind, dass sie nach dem Verkleben größtenteils verschwinden. Auch WO 98/29516 A1 hat Klebeschichten mit eingeprägtem Relief zum Gegenstand und beschreibt ein Verfahren zur Kontrolle der Topografie einer klebenden Oberfläche, bei dem das Relief beziehungsweise die Topografie der Klebeschicht das Klebeverhalten kontrolliert.

WO 02/11985 A1 beschreibt Klebebänder zum Einsatz in Flexodruckverfahren, die ein regelmäßiges Muster permanenter Nuten aufweisen. Darüber hinaus beschreibt die Schrift flexographische Druckverfahren und weitere Komponenten eines Geräts für den Flexodruck.

Auch die JP H05 289319 A offenbart ein Klebeband für Druckplatten. Die Klebeschicht weist Nuten auf, die bis zu einem der seitlichen Ränder der Klebeschicht reichen.

Die bisher bekannten Maßnahmen zum Vermeiden von Lufteinschlüssen sehen ein Abführen der Luft nach außen vor. Dadurch stellt sich jedoch häufig das Problem von Kapillareffekten, die sogar ein Ansaugen von Luft bewirken. Zudem gestaltet sich die Verteilung der Benetzungsfläche beziehungsweise der Klebkräfte bedingt durch die in der Klebeschicht vorhandenen Luftabführkanäle häufig nachteilig, was zu mangelhaften Verklebungen führen kann. Beispielsweise ist es möglich, dass Luft gar nicht nach außen abgeführt wird, sondern lediglich innerhalb der Klebeschicht in den nächsten Hohlraum verschoben wird. Dort kann es zu größeren Luftansammlungen kommen, welche die Genauigkeit der Verklebung beziehungsweise der Positionierung des Substrats herabsetzen. Darüber hinaus ist die tatsächlich erreichte Kontaktfläche zwischen Klebstoff und Substrat stark abhängig vom ausgeübten Anpressdruck.

Aufgabe der Erfindung ist es daher, ein Klebeband zur Verfügung zu stellen, mit dem die vorstehenden Probleme überwunden werden können. Insbesondere soll das Klebeband dem Verschieben von Luftblasen innerhalb des Klebebandes durch den anliegenden Anpressdruck entgegenwirken und weitgehend konstante Klebflächen und Klebkräfte unabhängig vom Anpressdruck ermöglichen.

Der Lösung der Aufgabe liegt der Gedanke zugrunde, eingeschlossene Luft nicht nach außen abzuleiten, sondern sie in definierte Aussparungen innerhalb der Klebeschicht abzuleiten und dort zu halten. Ein erster Gegenstand der Erfindung ist daher ein Klebeband, das mindestens eine Klebeschicht umfasst, wobei die Klebeschicht mindestens eine Rille aufweist und keine Rille bis zu einem der seitlichen Ränder der Klebeschicht reicht. Ein derartiges Klebeband weist keine Kapillareffekte auf, da es keine kontinuierlichen Kanäle enthält. Fluide und insbesondere Luft werden daher nicht in die Klebefläche gesogen. Die klar begrenzte und definierte Verklebungsfläche lässt die Ausprägung relativ konstanter Klebkräfte unabhängig vom Anpressdruck zu, und die Bildung neuer Luftblasen unter dem Einfluss eines an bestimmten Stellen des Klebebandes anliegenden Anpressdrucks wird vermieden.

Unter einer "Klebeschicht" wird eine Schicht des erfindungsgemäßen Klebebandes verstanden, die in direkten Kontakt mit einem Substrat treten und auf diesem anhaften kann. Erfindungsgemäß bevorzugt wird die Klebeschicht von einem Haftklebstoff gebildet. Darunter wird ein viskoelastischer Klebstoff verstanden, dessen abgebundener Film bei Raumtemperatur in trockenem Zustand permanent klebrig und klebfähig bleibt. Die Klebung erfolgt durch leichten Anpressdruck sofort auf fast allen Substraten.

Bevorzugt enthält die mindestens eine Klebeschicht des erfindungsgemäßen Klebebandes ein Polymer ausgewählt aus der Gruppe bestehend aus Naturkautschuken, Synthesekautschuken, Polyacrylaten, Silikonen und Gemischen aus zwei oder mehreren der vorstehenden Polymere. Besonders bevorzugt enthält die mindestens eine Klebeschicht des erfindungsgemäßen Klebebandes zu mindestens 30 Gew.-%, stärker bevorzugt zu mindestens 40 Gew.-% und insbesondere zu mindestens 50 Gew.-%, bezogen auf das Gesamtgewicht der Klebeschicht, ein Polymer ausgewählt aus der Gruppe bestehend aus Naturkautschuken, Synthesekautschuken, Polyacrylaten, Silikonen und Gemischen aus zwei oder mehreren der vorstehenden Polymere.

Synthesekautschuke umfassen bevorzugt Styrol-Butadien-Copolymere, Blockcopolymere wie beispielsweise Styrol-Isopren-Styrol, Styrol-Butadien-Styrol, Styrol-Ethylen/Butylen-Styrol, Styrol-Ethylen/Propylen-Styrol, sowie Kombinationen der vorstehenden Copolymere. Synthese- wie auch Naturkautschuke werden üblicherweise zusammen mit mindestens einem klebkraftverstärkenden Harz eingesetzt. Als klebkraftverstärkende Harze kommen beispielsweise Polymerisate von ungesättigten C₅-C₉-Kohlenwasserstoffen, Terpenharze und Kolophonium in Frage.

Unter "Polyacrylaten" werden Polymere verstanden, deren stoffmengenbezogene Monomerbasis zu mindestens 30% aus Acrylsäure, Methacrylsäure, Acrylsäureestern und/oder Methacrylsäureestern besteht, wobei Acrylsäureester und/oder Methacrylsäureester zumindest anteilig generell und bevorzugt zu mindestens 30% enthalten sind. Insbesondere wird unter einem "Polyacrylat" ein Polymerisat verstanden, welches durch radikalische Polymerisation von Acryl- und/oder Methylacrylmonomeren sowie gegebenenfalls weiteren, copolymerisierbaren Monomeren erhältlich ist.

Bevorzugt wird ein Polyacrylat eingesetzt, dass auf die folgende Monomerzusammensetzung zurückgeführt werden kann:
a) Acrylsäureester und/oder Methacrylsäureester der folgenden Formel

   CH₂ = C(R^{I})(COOR^{II})

   wobei R^{I} = H oder CH₃ und R" ein Alkylrest mit 4 bis 14 C-Atomen ist,
b) olefinisch ungesättigte Monomere mit funktionellen Gruppen, die beispielsweise gegenüber Epoxidgruppen reaktiv sind,
c) optional weitere Acrylate und/oder Methacrylate und/oder olefinisch ungesättigte Monomere, die mit der Komponente (a) copolymerisierbar sind.

Zur Anwendung des Polyacrylats als Haftkleber sind die Anteile der entsprechenden Komponenten (a), (b), und (c) derart gewählt, dass das Polymerisationsprodukt insbesondere eine Glastemperatur ≤ 15 °C (DMA bei geringen Frequenzen) aufweist.

Es ist insbesondere zur Herstellung von Haftklebemassen sehr vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponente (c) mit einem Anteil von 0 bis 40 Gew.-% zu wählen (die Angaben sind bezogen auf die Monomermischung für das "Basispolymer", also ohne Zusätze eventueller Additive zu dem fertigen Polymer, wie Harze etc).

Die Monomere der Komponente (a) sind insbesondere weichmachende und/oder unpolare Monomere. Vorzugsweise werden als Monomere (a) Acryl- und Methacrylsäureester mit Alkylgruppen bestehend aus 4 bis 14 C-Atomen, besonders bevorzugt 4 bis 9 C-Atomen, eingesetzt. Beispiele für derartige Monomere sind n-Butylacrylat, n-Butylmethacrylat, n-Pentylacrylat, n-Pentylmethacrylat, n-Amylacrylat, n-Hexylacrylat, Hexylmethacrylat, n-Heptylacrylat, n-Octylacrylat, n-Octylmethacrylat, n-Nonylacrylat, Isobutylacrylat, Isooctylacrylat, Isooctylmethacrylat, und deren verzweigten Isomere, wie zum Beispiel 2-Ethylhexylacrylat oder 2-Ethylhexylmethacrylat.

Die Monomere der Komponente (b) sind insbesondere olefinisch ungesättigte Monomere mit funktionellen Gruppen, insbesondere mit funktionellen Gruppen, die eine Reaktion mit Epoxidgruppen eingehen können.

Bevorzugt werden für die Komponente (b) Monomere mit funktionellen Gruppen eingesetzt, die ausgewählt sind aus der Gruppe umfassend: Hydroxy-, Carboxy-, Sulfonsäure- oder Phosphonsäuregruppen, Säureanhydride, Epoxide, Amine. Besonders bevorzugte Beispiele für Monomere der Komponente (b) sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itaconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat, Glycidylmethacrylat.

Prinzipiell können als Komponente (c) alle vinylisch funktionalisierten Verbindungen eingesetzt werden, die mit der Komponente (a) und/oder der Komponente (b) copolymerisierbar sind. Die Monomere der Komponente (c) können zur Einstellung der Eigenschaften der resultierenden Haftklebemasse dienen.

Beispielhafte Monomere der Komponente (c) sind:
Methylacrylat, Ethylacrylat, Propylacrylat, Methylmethacrylat, Ethylmethacrylat, Benzylacrylat, Benzylmethacrylat, *sec*-Butylacrylat, *tert*-Butylacηlat, Phenylacrylat, Phenylmethacrylat, Isobornylacrylat, Isobornylmethacrylat, *tert*-Butylphenylacrylat, *tert-*Butylphenylmethacrylat, Dodecylmethacrylat, Isodecylacrylat, Laurylacrylat, n-Undecylacrylat, Stearylacrylat, Tridecylacrylat, Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxyethylacrylat, 3,3,5-Trimethylcyclohexylacrylat, 3,5-Dimethyladamantylacrylat, 4-Cumylphenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofufurylacrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxyethylmethacrylat, 2-Phenoxyethylmethacrylat, Butyldiglykolmethacrylat, Ethylenglycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentylacrylat, Octafluoropentylmethacrylat, 2,2,2-Trifluoroethylmethacrylat, 1,1,1,3,3,3-Hexafluoroisopropylacrylat, 1,1,1,3,3,3-Hexafluoroisopropylmethacrylat, 2,2,3,3,3-Pentafluoropropylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat, Dimethylaminopropylacrylamid, Dimethylaminopropylmethacrylamid, *N*-(1-Methylundecyl)acrylamid, *N*-(n-Butoxymethyl)acrylamid, *N*-(Butoxymethyl)methacrylamid, *N-*(Ethoxymethyl)acrylamid, *N*-(n-Octadecyl)acrylamid, weiterhin *N*,*N*-Dialkyl-substituierte Amide, wie beispielsweise *N*,*N*-Dimethylacrylamid, *N*,*N*-Dimethylmethacrylamid, *N-*Benzylacrylamide, *N*-Isopropylacrylamid, *N-tert*-Butylacrylamid, *N-tert*-Octylacrylamid, *N-*Methylolacrylamid, *N*-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, *N*-Vinylphthalimid, *N*-Vinyllactam, *N*-Vinylpyrrolidon, Styrol, α- und p-Methylstyrol, α-Butylstyrol, 4-n-Butylstyrol, 4-n-Decylstyrol, 3,4-Dimethoxystyrol. Makromonomere wie 2-Polystyrolethylmethacrylat (Molekulargewicht Mw von 4000 bis 13000 g/mol), Poly(methylmethacrylat)ethylmethacrylat (Mw von 2000 bis 8000 g/mol).

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofufurylacrylat, *N-tert-*Butylacrylamid und Allylacrylat.

Die Herstellung der Polyacrylate kann nach dem Fachmann geläufigen Verfahren geschehen, insbesondere vorteilhaft durch konventionelle radikalische Polymerisationen oder kontrollierte radikalische Polymerisationen. Die Polyacrylate können durch Copolymerisation der monomeren Komponenten unter Verwendung der üblichen Polymerisationsinitiatoren sowie gegebenenfalls von Reglern hergestellt werden, wobei bei den üblichen Temperaturen in Substanz, in Emulsion, zum Beispiel in Wasser oder flüssigen Kohlenwasserstoffen, oder in Lösung polymerisiert wird.

Die gewichtsmittleren Molekulargewichte Mw der Polyacrylate liegen bevorzugt in einem Bereich von 20.000 bis 2.000.000 g/mol; sehr bevorzugt in einem Bereich von 100.000 bis 1.000.000 g/mol, äußerst bevorzugt in einem Bereich von 150.000 bis 500.000 g/mol [die Angaben des mittleren Molekulargewichtes Mw und der Polydisperistät PD in dieser Schrift beziehen sich auf die Bestimmung per Gelpermeationschromatographie]. Dazu kann es vorteilhaft sein, die Polymerisation in Gegenwart geeigneter Polymerisationsregler wie Thiole, Halogenverbindungen und/oder Alkohole durchzuführen, um das gewünschte mittlere Molekulargewicht einzustellen.

Silikone sind bevorzugt Polydiorganosiloxane mit einem zahlenmittleren Molekulargewicht von etwa 5.000 bis etwa 10.000.000, insbesondere von etwa 50.000 bis etwa 1.000.000 und/oder copolymere Silikonharze , die auch als MQ-Harze bezeichnet werden, mit einem zahlenmittleren Molekulargewicht von etwa 100 bis etwa 1.000.000, insbesondere von etwa 500 bis etwa 50.000. Die MQ-Harze enthalten Triorganosilyloxy-Einheiten sowie SiO_{4/2}-Einheiten. Silikon-basierende Haftklebstoffe enthalten üblicherweise 20 bis 60 Gewichtsteile Polydiorganosiloxane und 40 bis 80 Gewichtsteile eines oder mehrerer MQ-Harze(s). Üblicherweise wird eine Reaktion der Polydiorganosiloxane mit den MQ-Harzen angestrebt, um klebende Eigenschaften auszubilden. Eine solche Reaktion kann beispielsweise eine Kondensationsreaktion zwischen im MQ-Harz enthaltenen Silanol-Funktionalitäten und endständigen Silanol-Gruppen der Diorganopolysiloxane sein. Einen weiteren möglichen Reaktionsweg bilden Additionsreaktionen zwischen Alkenyl-Funktionalitäten der Polydiorganosiloxane und Si-H-, Alkenyl- und/oder Silanol-Funktionalitäten der MQ-Harze.

Die mindestens eine Klebeschicht des erfindungsgemäßen Klebebandes kann Additive enthalten, welche zur Ausprägung bestimmter Eigenschaften der Klebeschicht beitragen können. Bei diesen Additiven kann es sich beispielsweise um Pigmente, Weichmacher, Füllstoffe, Stabilisatoren, Antioxidantien etc. handeln. Der Anteil der Additive an der Klebeschicht beträgt bevorzugt von 0,1 bis 50 Gew.-%, bezogen auf das Gesamtgewicht der Klebeschicht.

Das Flächengewicht der Klebeschicht beträgt bevorzugt maximal 200 g/m², stärker bevorzugt maximal 100 g/m² und insbesondere 40 bis 100 g/m², beispielsweise 60 bis 100 g/m². Das angegebene Flächengewicht bezieht sich auf die vollständig ausgeprägten Bereiche der Klebeschicht und somit nicht auf die erfindungsgemäß vorgesehenen Rillen.

Ebenfalls bevorzugt ist die Klebeschicht eine zusammenhängende Klebeschicht. Darunter wird eine Klebeschicht verstanden, die parallel zu ihrer Oberfläche eine Ebene mit durchgehend vorhandener, das heißt an keiner Stelle durchbrochener, Klebeschicht aufweist. Eine zusammenhängende Klebeschicht weist selbstverständlich die erfindungsgemäß vorgesehene(n) Rille(n) auf, diese dürfen im Falle einer zusammenhängenden Klebeschicht jedoch nicht so tief sein, dass die Klebeschicht unterbrochen ist. Vorausgesetzt, dass die Oberfläche der Klebeschicht im wesentlichen in der x-y-Ebene liegt, muss demgemäß bei einer zusammenhängenden Klebeschicht ein Schnitt parallel zur x-y-Ebene in einer bestimmten Tiefe z dazu führen, dass an jedem Punkt in der Schnittebene Klebemasse vorliegt. Als Oberfläche der Klebeschicht wird die Grenzfläche zum umgebenden Medium auf der dem zu verklebenden Substrat zugewandten Seite der Klebeschicht angesehen, wobei für Berechnungen und für sich auf die Oberfläche beziehende Definitionen die von den Rillen eingenommene Oberfläche mit der in der Klebeschichtebene liegenden "Grundfläche" der Rille gleichgesetzt wird. Dementsprechend wird im Falle einer Rille die Oberfläche als in der gleichen Ebene wie die Klebemasse enthaltende Oberfläche weiterverlaufend angesehen.

Bei dem erfindungsgemäßen Klebeband kann es sich sowohl um ein ein- als auch um ein doppelseitiges Klebeband handeln.

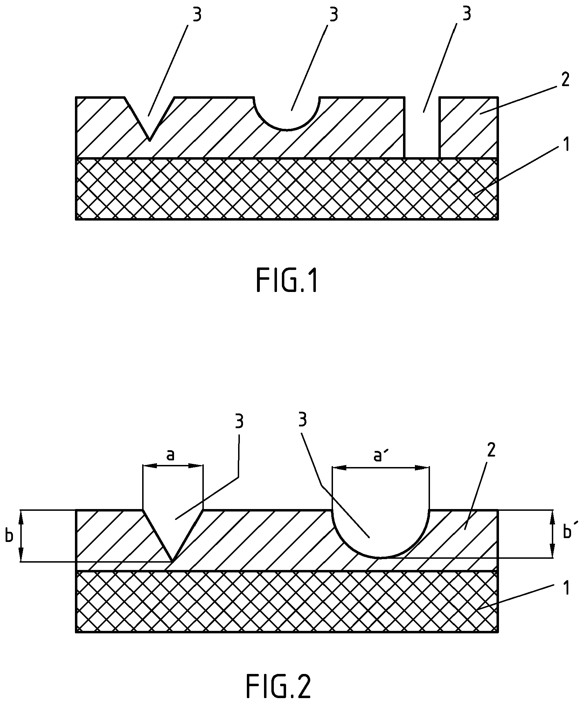

Unter einer "Rille" wird eine in der Oberfläche der Klebeschicht beginnende, makroskopisch wahrnehmbare Aussparung innerhalb der Klebeschicht verstanden, die grundsätzlich eine beliebige Form und Tiefe haben kann. Figur 1 illustriert anhand der Darstellung eines in Richtung der Schichtenabfolge in einem Winkel von 90° zur Laufrichtung der Rillen erfolgten Schnittes durch ein erfindungsgemäßes Klebeband einige Varianten von Rillen in der Klebeschicht. Darin bedeuten:
- 1: - Träger
- 2: - Klebeschicht
- 3: - Rillen.

Erfindungsgemäß bevorzugt beträgt die Rillentiefe mindestens 10 µm, stärker bevorzugt mindestens 20 µm, insbesondere mindestens 25 µm, beispielsweise mindestens 30 µm. Unter der "Rillentiefe" wird die maximale Ausdehnung einer Rille senkrecht zu der Ebene verstanden, in der die Oberfläche der Klebeschicht liegt. Die Oberfläche der Klebeschicht befindet sich an der dem Substrat zugewandten Seite der Klebeschicht. Ebenfalls bevorzugt beträgt die Rillentiefe maximal 200 µm, stärker bevorzugt maximal 100 µm, insbesondere maximal 60 µm, beispielsweise maximal 50 µm.

Darüber hinaus variiert die Rillentiefe aller Rillen vorzugsweise um nicht mehr als 20%. Die auf diese Weise erreichte gleichmäßige Topographie gewährleistet gleichbleibende Klebeeigenschaften über die volle Ausdehnung des Klebebandes hinweg.

Erfindungsgemäß bevorzugt beträgt die Rillenbreite 10 bis 200 µm. Unter der "Rillenbreite" wird die maximale Entfernung der Rillenränder voneinander in einem Winkel von 90° zur Laufrichtung der Rille an einer beliebigen Stelle der Rille verstanden.

Figur 2 verdeutlicht die Bedeutung der Begriffe "Rillentiefe" und "Rillenbreite" anhand der Darstellung eines parallel zur Schichtenabfolge und in einem Winkel von 90° zur Laufrichtung der Rillen erfolgten Schnittes durch ein erfindungsgemäßes Klebeband. Darin bedeuten:
- 1: - Träger
- 2: - Klebeschicht
- 3: - Rillen
- a, a': - Rillenbreite
- b, b': - Rillentiefe.

Erfindungsgemäß reicht keine Rille bis zu einem der seitlichen Ränder der Klebeschicht. Darunter wird verstanden, dass keine Rille Kontakt mit einem Rand hat, der die Oberfläche der Klebeschicht oder irgendeine unterhalb der Oberfläche und parallel zur Ebene der Oberfläche liegende Fläche der Klebeschicht begrenzt. Vielmehr befindet sich zwischen Rille und Rand immer zumindest eine minimale Menge Klebemasse. Die Ausgestaltung der Rillenstruktur des erfindungsgemäßen Klebebandes unterscheidet sich somit von herkömmlichen Topographien, die durchgehende, mit seitlichen Rändern in Kontakt stehende Kanäle zum Abtransport von Luft vorsehen. Mit dem erfindungsgemäßen Klebeband lassen sich die bereits aufgeführten Nachteile derartiger Ausgestaltungen vermeiden, ohne dass Lufteinschlüsse die Verklebungsqualität beeinflussen. Bevorzugt beträgt der Abstand zwischen seitlichem Rand des Klebebandes und den Rillen mindestens 1 mm.

Das vom erfindungsgemäßen Klebeband eingeschlossene Luftvolumen und die erreichbare Substratbenetzungsfläche stehen bevorzugt in einem solchen Verhältnis zueinander, dass auftretende Druck- und Schubspannungen im Montageprozess und während der Anwendung des Klebebandes die Luft nicht verschieben können. Bevorzugt beträgt die nicht gerillte Oberfläche der Klebeschicht 50 bis 99 %, insbesondere 70 bis 95 % und ganz besonders bevorzugt 75 bis 90 % der Gesamtoberfläche der Klebeschicht.

Bevorzugt ist die mindestens eine Rille eine permanente Rille. Darunter wird verstanden, dass die rheologischen Eigenschaften der Klebeschicht so eingestellt sind, dass die durch die Rille(n) bestimmte Topographie der Klebeschicht in ihrer wesentlichen Ausprägung während der beabsichtigten Nutzung des erfindungsgemäßen Klebebandes nachhaltig erhalten bleibt. Besonders bevorzugt bedeutet "permanente Rille", dass die Topographie auch nach mehrfacher Benutzung des Klebebandes oder nach Benutzung über längere Zeit, zum Beispiel über mehrere Stunden bei 20 bis 80 °C, in ihrer wesentlichen Ausprägung erhalten bleibt. Diese Permanenz der Rille(n) gewährleistet, dass auch bei mehrfacher oder länger dauernder Beanspruchung des Klebebandes eine Aufnahme von Luft in den dafür vorgesehenen Aussparungen erfolgen kann und somit exakte Verklebungen möglich sind.

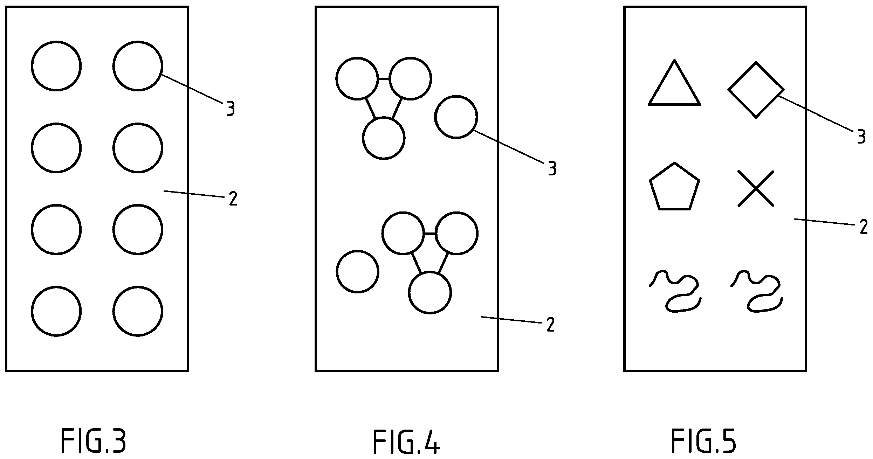

Die geometrische Form des Verlaufs der Rillen ist grundsätzlich frei wählbar und kann beispielsweise Linien, Kreise, Vielecke und/oder formlose Gebilde umfassen. Auch Schriftzüge, Logos oder ähnliches sind möglich. Sich wiederholende Muster können untereinander verbunden sein oder separat voneinander vorliegen. Die Figuren 3 bis 5 zeigen jeweils eine Draufsicht auf die gerillte Klebeschicht eines erfindungsgemäßen Klebebandes und verdeutlichen mögliche Rillenformen. Figur 3 zeigt sich wiederholende, voneinander separat vorliegende Formen. Figur 4 zeigt sich wiederholende, teilweise separat voneinander und teilweise miteinander verbundene Rillenformen. Figur 5 zeigt verschiedene, separat voneinander vorliegende Rillenformen. Es bedeuten jeweils:
2 - Klebeschicht
3 - Rillen.

Die Rillen können darüber hinaus in einem Schnitt in Richtung der Schichtenabfolge und im Winkel von 90° zu ihrer Laufrichtung ebenfalls grundsätzlich eine beliebige Form aufweisen, die beispielsweise dreieckige, rechteckige oder halbkreisförmige Varianten umfasst. Einige dieser Formen gehen bereits aus Figur 1 hervor.

Das erfindungsgemäße Klebeband umfasst weitere Schichten in der in Anspruch 1 definierten Abfolge. Bevorzugt umfasst das erfindungsgemäße Klebeband eine weitere Haftklebemasse auf der der gerillten Klebeschicht gegenüberliegenden Außenseite des Klebebandes, eine Stabilisierungsfolie, bei der es sich beispielsweise um eine PET-Folie handeln kann, eine Schaumschicht und eine Kaschierklebemasse.

Bei der weiteren Haftklebemasse kann es sich um eine erfindungsgemäß Rillen aufweisende Haftklebemasse handeln. Die Stabilisierungsfolie erhöht vorteilhaft die Zugresistenz des erfindungsgemäßen Klebebandes und vereinfacht somit dessen Demontage. Die Schaumschicht erhöht die Druckqualität. Die Kaschiermasse dient insbesondere zur Fixierung der Stabilisierungsfolie auf dem Schaum.

Das erfindungsgemäße Klebeband enthält somit die folgenden Schichten in der angegebenen Abfolge:
- gerillte Haftklebemasse
- Stabilisierungsfolie
- Kaschierklebemasse
- Schaumschicht
- weitere Haftklebemasse (gerillt oder nicht gerillt).

Möglich (jedoch nicht erfindungsgemäß) ist auch ein vorstehender Aufbau, bei dem keine Kaschierklebemasse enthalten ist, bei dem die Stabilisierungsfolie aber beidseitig mit einer Polyethylenschicht umgeben ist, die beispielsweise als flüssige Masse auf die Stabilisierungsfolie aufgetragen wurde.

Ein weiterer Gegenstand der Offenbarung ist ein Releaseliner mit mindestens einer Oberfläche, die mindestens einen Grat aufweist, wobei kein Grat bis zu einem der seitlichen Ränder des Releaseliners reicht. Mit einem derartigen Releaseliner lässt sich die von den Graten bestimmte Struktur auf einfache Weise in die Klebeschicht einprägen und somit dort das oben beschriebene Rillenmuster erzeugen.

Unter einem Releaseliner - im Folgenden auch einfach als Liner bezeichnet - wird ein eine antihaftende (abhäsive) Oberfläche aufweisendes Abdeckmaterial verstanden, das zum temporären Schutz einer Klebemasse direkt auf die Masse aufgebracht wird und in der Regel unmittelbar vor Applikation der Klebemasse durch einfaches Abziehen entfernt werden kann. Ein Releaseliner sorgt unter anderem dafür, dass die Klebemasse vor der Anwendung nicht verschmutzt wird. Zusätzlich können Releaseliner über die Art und Zusammensetzung der Releasematerialien so eingestellt werden, dass das Klebeband mit der gewünschten Kraft (leicht oder schwer) abgerollt werden kann. Bei beidseitig mit Klebmasse beschichteten Klebebändern sorgt der Releaseliner zusätzlich dafür, dass beim Abrollen die richtige Seite der Klebemasse zuerst freigelegt wird.

Ein Liner ist nicht Bestandteil eines Klebebandes, sondern nur ein Hilfsmittel zu dessen Herstellung, Lagerung oder für die Weiterverarbeitung. Darüber hinaus ist ein Liner im Gegensatz zu einem Klebebandträger nicht fest mit einer Klebstoffschicht verbunden, sondern der Verbund ist nur temporär und nicht dauerhaft.

Unter einem "Grat" wird eine in der Oberfläche des Liners beginnende, makroskopisch wahrnehmbare Erhöhung verstanden, die grundsätzlich eine innerhalb des Kontexts der Erfindung liegende beliebige Form und Höhe haben kann. Bezüglich möglicher Formen und Anordnungsmuster der Grate des Liners gilt das oben zu den Rillen beziehungsweise dem Rillenmuster der Klebeschicht Gesagte entsprechend. Die geometrische Form des Verlaufs der Grate ist somit grundsätzlich ebenfalls frei wählbar und kann beispielsweise Linien, Kreise, Vielecke und/oder formlose Gebilde umfassen. Auch Schriftzüge, Logos oder ähnliches sind möglich. Sich wiederholende Muster können untereinander verbunden sein oder separat voneinander vorliegen. Im Querschnitt umfassen die Grate beispielsweise dreieckige, rechteckige oder halbkreisförmige Varianten.

Unter einer "Oberfläche" des Liners wird die jeweilige Grenzfläche der beiden Seiten des Liners zum umgebenden Medium angesehen, wobei für Berechnungen und für sich auf die Oberfläche beziehende Definitionen die von den Graten eingenommene Fläche mit der Grundfläche am Fuß der Grate gleichgesetzt wird. Erfindungsgemäß bevorzugt beträgt der Anteil der mit Graten besetzten Fläche an der mindestens einen Grat aufweisenden Oberfläche des Liners 1 bis 50 %, stärker bevorzugt 5 bis 30 % und insbesondere 10 bis 25 %. Unter der "mit Graten besetzten Fläche" ist die mit Graten besetzte Grundfläche der betreffenden Oberfläche zu verstehen, die Oberfläche des Grates selbst bleibt hierbei unbeachtlich.

Es reicht kein Grat bis zu einem der seitlichen Ränder des Releaseliners. Darunter wird in einem zum Rillenmuster des erfindungsgemäßen Klebebandes korrespondierenden Sinne verstanden, dass kein Grat Kontakt mit einem Rand hat, der die Oberfläche des Liners begrenzt.

Die Grathöhe des Releaseliners beträgt bevorzugt 10 bis 200 µm, stärker bevorzugt 20 bis 100 µm, insbesondere 25 bis 60 µm, beispielsweise 30 bis 50 µm. Unter der "Grathöhe" wird die maximale Ausdehnung eines Grates senkrecht zu der Ebene verstanden, in der die Oberfläche des Liners liegt.

Die Gratbreite am Fuß des Grates beträgt bevorzugt 10 bis 200 µm. Unter der "Gratbreite" wird die maximale Entfernung zweier Punkte am Fuß des Grates voneinander in einem Winkel von 90° zur Laufrichtung des Grates an einer beliebigen Stelle des Grates verstanden.

Die Messung der Ausdehnung der Grate des Liners und der Rillen des erfindungsgemäßen Klebebandes, insbesondere die Messung der Grathöhen und der Rillentiefen, erfolgt mittels Rasterelektronenmikroskopie (REM).

Der Liner kann auf einer Seite oder auch auf beiden Seiten jeweils mindestens einen Grat enthalten.

Der Liner umfasst bevorzugt mindestens einen Träger und mindestens ein Trennmaterial.

Das Trägermaterial des Liners enthält bevorzugt ein Polymer ausgewählt aus der Gruppe bestehend aus Polypropylen, insbesondere monoaxial und biaxial orientiertem Polypropylen, Polyethylenterephthalat, Polyethylen, Polyvinylchlorid und Gemischen aus zwei oder mehreren der vorstehenden Polymere. Stärker bevorzugt enthält das Trägermaterial des Liners zu mindestens 30 Gew.-%, besonders bevorzugt zu mindestens 50 Gew.-%, insbesondere zu mindestens 70 Gew.-%, beispielsweise zu mindestens 90 Gew.-% ein Polymer ausgewählt aus der Gruppe bestehend aus Polypropylen, insbesondere monoaxial und biaxial orientiertem Polypropylen, Polyethylenterephthalat, Polyethylen, Polyvinylchlorid und Gemischen aus zwei oder mehreren der vorstehenden Polymere. Das Trägermaterial des Liners enthält besonders bevorzugt Polypropylen oder ein Dreifachextrudat der Abfolge Polyethylen-Polypropylen-Polyethylen.

Als Trennmittel beziehungsweise Trennmaterial können grundsätzlich alle dem Fachmann bekannten Systeme verwendet werden. Bevorzugt ist das Trennmittel gewählt aus der Gruppe Silikon, fluoriertes Silikon, Silikon-Copolymere, Wachse, Carbamate oder Mischungen aus zwei oder mehr der genannten Stoffe.

Das Trennmittel kann lösungsmittelhaltige und/oder lösungsmittelfreie Systeme umfassen, bevorzugt werden lösungsmittelhaltige Systeme. Das Trennmittel kann darüber hinaus strahlungsvernetzend (UV- oder Elektronenstrahl-), kondensations- oder additionsvernetzend sein, bevorzugt ist es kondensationsvernetzend.

Als Trennmittel werden bevorzugt vernetzbare Silikonsysteme eingesetzt. Dazu zählen Mischungen aus Vernetzungskatalysatoren und so genannten thermisch härtbaren kondensations- oder additionsvernetzenden Polysiloxanen. Für kondensationsvernetzende Silikonsysteme sind als Vernetzungskatalysatoren häufig Zinnverbindungen wie Dibutylzinndiacetat in der Masse zugegen.

Bei dem Liner kann es sich auch um ein mit einem der vorstehenden Trennmittel beschichtetes Papier handeln.

Die Dicke des Liners ohne Berücksichtigung der Grate beträgt bevorzugt 20 bis 200 µm.

Ein weiterer Gegenstand der Offenbarung ist ein Verfahren zum Erzeugen von mindestens einer Rille in einer Klebstoffoberfläche, mindestens umfassend das Inkontaktbringen einer Materialoberfläche aufweisend mindestens einen Grat mit der Oberfläche einer Klebeschicht derart, dass die mindestens einen Grat aufweisende Materialoberfläche in der Klebeschichtoberfläche eine Topographie von Rillen erzeugt, die im Wesentlichen die Umkehrung der Topographie der mindestens einen Grat aufweisenden Materialoberfläche ist;
wobei keine Rille bis zu einem der seitlichen Ränder der Klebeschicht reicht. Die obigen Definitionen von Begriffen wir "Rille", "Oberfläche" etc. gelten in vollem Umfang. Bevorzugt ist die vorstehende Materialoberfläche die mindestens einen Grat aufweisende Oberfläche des Releaseliners. Die Grattopographie auf der Oberfläche des Liners kann beispielsweise durch Umformung (Prägeverfahren), Urformung (Cast-Folie) oder durch Bedruckung erhalten werden.

Dem Verfahren entsprechend kann die Topographie des Liners beispielsweise derart auf die Klebeschicht übertragen werden, dass der Liner mit der Klebemasse direkt beschichtet wird oder durch Kaschieren mit der Masse in Kontakt gebracht wird.

Ein weiterer Gegenstand der Offenbarung ist ein Verbund, der einen Releaseliner und eine mit der mindestens einen Grat aufweisenden Oberfläche des Releaseliners in unmittelbarem Kontakt stehende Klebstoffschicht umfasst, wobei die Klebstoffschicht eine Topographie aufweist, die im Wesentlichen die Umkehrung der Topographie der mindestens einen Grat aufweisenden Oberfläche des Releaseliners ist.

## Patentansprüche

1. Klebeband umfassend mindestens eine Klebeschicht, wobei die Klebeschicht mindestens eine Rille aufweist und keine Rille bis zu einem der seitlichen Ränder der Klebeschicht reicht, **dadurch gekennzeichnet, dass**
die Klebeschicht von einem Haftklebstoff gebildet wird und
das Klebeband die folgenden Schichten in der angegebenen Reihenfolge enthält:
- gerillte Klebeschicht
- Stabilisierungsfolie
- Kaschierklebemasse
- Schaumschicht
- weitere Haftklebemasse.

2. Klebeband gemäß Anspruch 1, **dadurch gekennzeichnet, dass** die Klebeschicht eine zusammenhängende Klebeschicht ist.

3. Klebeband gemäß mindestens einem der vorstehenden Ansprüche, **dadurch gekennzeichnet, dass** die nicht gerillte Oberfläche der Klebeschicht 50 bis 99 % der Gesamtoberfläche der Klebeschicht beträgt.

4. Klebeband gemäß mindestens einem der vorstehenden Ansprüche, **dadurch gekennzeichnet, dass** die Rillentiefe mindestens 10 µm beträgt.

5. Klebeband gemäß mindestens einem der vorstehenden Ansprüche, **dadurch gekennzeichnet, dass** die Rillentiefe maximal 100 µm beträgt.

6. Klebeband gemäß mindestens einem der vorstehenden Ansprüche, **dadurch gekennzeichnet, dass** die Rillenbreite 10 bis 200 µm beträgt.

7. Klebeband gemäß mindestens einem der vorstehenden Ansprüche, **dadurch gekennzeichnet, dass** die mindestens eine Rille eine permanente Rille ist.

## Claims

1. Adhesive tape comprising at least one adhesive layer, wherein the adhesive layer has at least one groove and no groove extends to one of the side edges of the adhesive layer, **characterized in that**
the adhesive layers is formed of a pressure-sensitive adhesive and
the adhesive tape includes the following layers in the stated order:
- grooved adhesive layer
- stabilizing film
- laminating adhesive
- foam layer
- further pressure-sensitive adhesive.

2. Adhesive tape according to Claim 1, **characterized in that** the adhesive layer is a coherent adhesive layer.

3. Adhesive tape according to at least one of the preceding claims, **characterized in that** the nongrooved surface area of the adhesive layer is 50% to 99% of the total surface area of the adhesive layer.

4. Adhesive tape according to at least one of the preceding claims, **characterized in that** the groove depth is at least 10 µm.

5. Adhesive tape according to at least one of the preceding claims, **characterized in that** the groove depth is not more than 100 µm.

6. Adhesive tape according to at least one of the preceding claims, **characterized in that** the groove width is 10 to 200 µm.

7. Adhesive tape according to at least one of the preceding claims, **characterized in that** the at least one groove is a permanent groove.

## Revendications

1. Bande adhésive comprenant au moins une couche adhésive, la couche adhésive comprenant au moins une rainure et aucune rainure n'atteignant un des bords latéraux de la couche adhésive, **caractérisé en ce que**
la couche adhésive est formée par un adhésif de contact et
la bande adhésive contient les couches suivantes dans l'ordre indiqué :
- couche adhésive rainurée,
- film de stabilisation,
- matériau adhésif de contre-collage,
- couche de mousse,
- matériaux adhésif de contact supplémentaire.

2. Bande adhésive selon la revendication 1, **caractérisée en ce que** la couche adhésive est une couche adhésive cohérente.

3. Bande adhésive selon au moins l'une quelconque des revendications précédentes, **caractérisée en ce que** la surface non rainurée de la couche adhésive représente 50 à 99 % de la surface totale de la couche adhésive.

4. Bande adhésive selon au moins l'une quelconque des revendications précédentes, **caractérisée en ce que** la profondeur des rainures est d'au moins 10 µm.

5. Bande adhésive selon au moins l'une quelconque des revendications précédentes, **caractérisée en ce que** la profondeur des rainures est d'au plus 100 µm.

6. Bande adhésive selon au moins l'une quelconque des revendications précédentes, **caractérisée en ce que** la largeur des rainures est de 10 à 200 µm.

7. Bande adhésive selon au moins l'une quelconque des revendications précédentes, **caractérisée en ce que** ladite au moins une rainure est une rainure permanente.
